# FASCICULE DE BREVET EUROPEEN

(11) **EP 2 021 156 B1**
(45) Date de publication et mention de la délivrance du brevet: **14.05.2014**
(21) Numéro de dépôt: 07805034.1
(22) Date de dépôt: 30.05.2007
(51) Int. Cl.: B29C 31/00, B65B 43/50, B29D 23/20, B65G 47/84

(54) **UNITE D'ASSEMBLAGE DE COMPOSANTS DE TUBES**
ZUSAMMENSETZUNGSANLAGE FÜR TUBENKOMPONENTEN
ASSEMBLING UNIT FOR TUBE COMPONENTS

(30) Priorité: 02.06.2006 EP 06114913; 02.06.2006 EP 06114918
(43) Date de publication de la demande: 11.02.2009
(73) Titulaire: Aisapack Holding SA, 1896 Vouvry (CH)
(72) Inventeur: VOIGTMANN, Jean-Pierre, 1893 Muraz (CH); STAHL, Christophe, 1084 Carrouge (CH)
(74) Mandataire: Grosfillier, Philippe
(86) Numéro de dépôt international: PCT/IB2007/052035
(87) Numéro de publication internationale: WO 2007/141711

(56) Documents cités:
- EP-A2- 0 794 044
- CH-A- 431 923
- US-A- 5 211 798
- US-B1- 6 221 189

## Description

### Domaine de l'invention

La présente invention se situe dans le domaine des emballages en forme de tube qui comprennent une épaule et/ou une jupe.

Elle concerne plus précisément l'assemblage des composants de tube.

### Etat de la technique

On connaît divers dispositifs qui permettent d'assembler des composants de tubes, par exemple pour le soudage d'une épaule de tube à une jupe.

Un dispositif d'assemblage couramment utilisé est constitué d'un plateau rotatif sur lequel sont disposés des mandrins destinés à recevoir temporairement des composants de tubes, p.ex. des jupes.

Si l'on souhaite traiter simultanément plusieurs tubes, les dimensions du dispositif d'assemblage, en particulier la surface qu'il occupe sur le sol, peuvent devenir très importantes.

Le brevet américain US 6,221,189 B1 décrit un dispositif d'assemblage comprenant une tourelle sur laquelle sont disposés plusieurs mandrins selon le préambule de la revendication 1.

Ce dispositif permet de réduire l'encombrement, principalement selon un plan horizontal.

Cependant la disposition des mandrins, comme décrit dans le brevet, nécessite un déplacement des stations de travail pour dégager les mandrins avant la rotation de la tourelle. Le déplacement de ces stations de travail occasionne de grands mouvements de masse.

De plus, pratiquement chaque station nécessite des dispositifs comme un guidage linéaire et un actionneur pour effectuer son déplacement.

La présence de tels dispositifs a pour effet d'augmenter l'encombrement de l'ensemble du dispositif d'assemblage et de diminuer l'accessibilité au stations de travail et les mandrins.

On connaît des mandrins effectuant un mouvement réciproque dans le sens de la longueur, voir p.ex. EP 0 794 044 A2. Il n'est cependant pas possible de disposer de tels mandrins sur la face latérale d'une tourelle qui effectue une rotation selon un axe vertical, càd perpendiculaire à la direction des mandrins. En effet, le disque rotatif décrit dans EP 0 794 044 A2 tourne selon un axe parallèle à la direction des mandrins.

### Résumé de l'invention

La présente invention vise notamment à remédier aux problème précités.

Elle concerne une unité d'assemblage de composants de tubes selon la revendication 1.

En rendant les mandrins mobiles, les stations de travail, p.ex. pour le soudage d'une épaule sur une jupe, peuvent être statiques, ce qui a pour conséquence de réduire considérablement la masse en mouvement et de diminuer les contraintes exercées sur des pièces telles que câbles, flexibles, connectique, etc... qui alimentent et sont entraînés avec des stations de travail.

Un des avantages offerts par la présente invention réside dans le fait qu'il est possible d'utiliser qu'un seul mécanisme, de préférence disposé au centre de la tourelle, pour actionner et déplacer l'ensemble des mandrins vers les stations de travail qui sont disposées autour de la tourelle.

L'unité de transfert peut donc être intégrée dans une installation d'assemblage de composants de tubes qui comprend en outre une station de travail fixe qui est adaptée pour recevoir et traiter simultanément plusieurs jupes.

Chaque mandrin est monté mobile de manière à pouvoir déposer ou reprendre des jupes dans la station de travail.

L'utilisation d'une unité d'assemblage de composants de tubes telle que décrite précédemment se caractérise essentiellement par les étapes suivantes :
- disposition des jupes sur les mandrins
- traitement des composants de tube par déplacement des mandrins et/ou rotation de la tourelle et par insertion et/ou retrait desdits composants dans des stations de travail,
- retrait des composants de tubes de la tourelle.

L'invention sera mieux comprise ci-après au moyen d'une description détaillée et d'exemples non-limitatifs illustrés par des figures.

### Brève description des figures

La figure 1 représente un exemple de tourelle de transfert selon l'invention.
La figure 2 représente une tourelle selon l'invention avec des mandrins rétractables, ces derniers étant en contact avec une station de travail.
La figure 3 représente le même ensemble que celui de la figure 2 mais avec des mandrins rétractés.
La figure 4 illustre la rotation de la tourelle des figures 2 et 3.

### Liste des références numériques utilisées dans les figures

1. Tourelle
2. Mandrin
3. Bloc de mandrins
4. Station de travail
5. Bielle
6. Arbre de commande
7. Base de la tourelle
8. Axe de symétrie de la tourelle
9. Axe de symétrie des mandrins

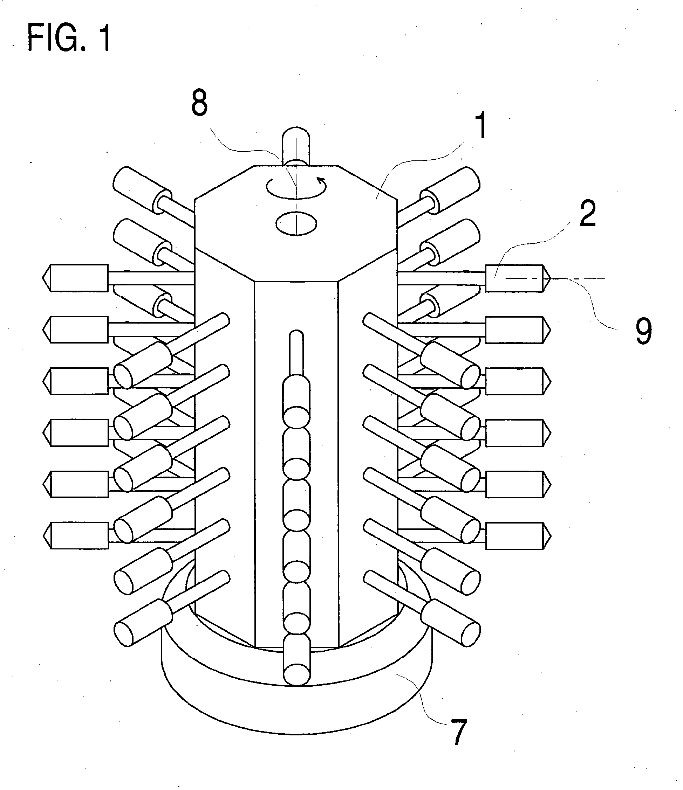

La tourelle 1 illustrée sur la figure 1 comporte un bloc central vertical à section octogonale. Chaque face de la tourelle comporte un groupe de mandrins 2 distribués verticalement qui s'étendent selon des directions perpendiculaires à l'axe de symétrie de la tourelle 1. Les mandrins 2 sont en outre regroupés par séries selon un plan horizontal et forme de la sorte un empilement ou, exprimé différemment, une succession d'étages.

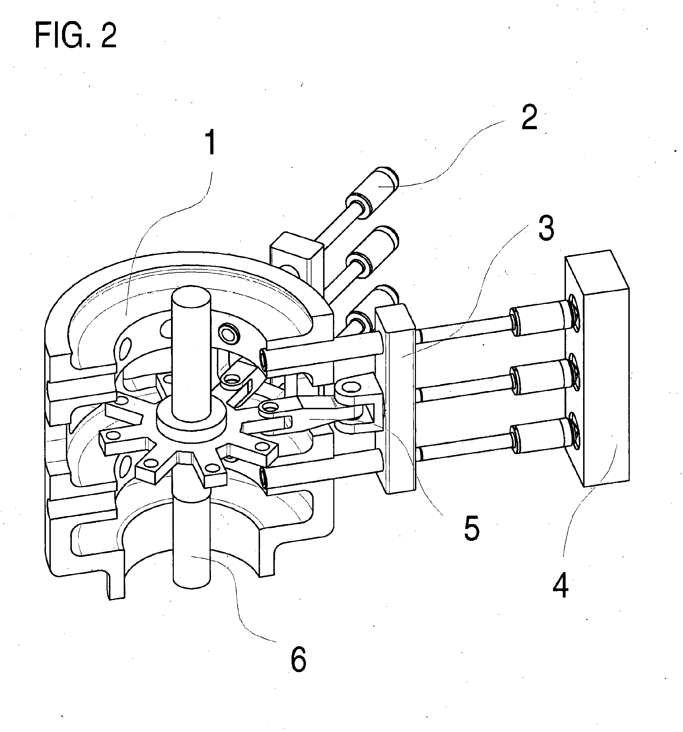

Les figures 2 à 4 illustrent une variante de l'invention dans laquelle les mandrins 2 sont montés mobiles selon une direction qui se confond avec leurs axes de symétrie 9 respectifs.

Le déplacement des mandrins 2 est assuré par un système comprenant des bielles 5 qui sont entraînées par l'arbre de commande 6 de la tourelle 1.

Dans la position illustrée sur la figure 2, les mandrins 2 sont en contact avec une station de travail, p.ex. pour le soudage d'une épaule sur une jupe (non-illustré).

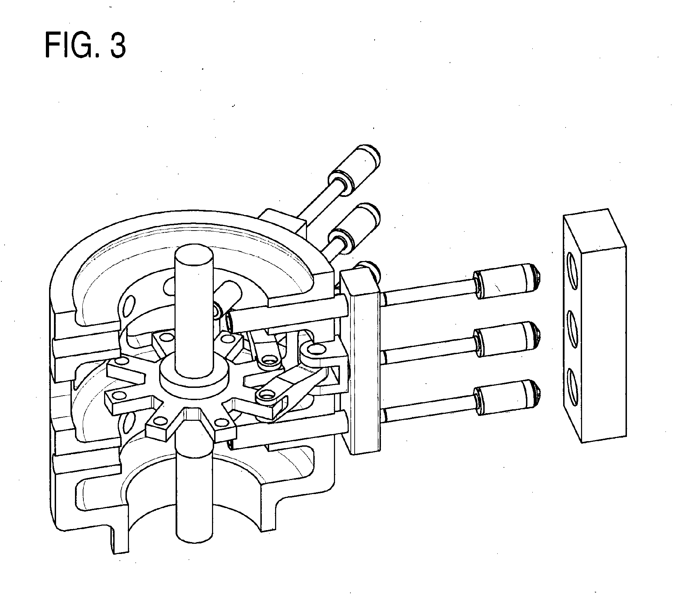

Dans la position illustrée sur la figure 3, les mandrins 2 sont rétractés.

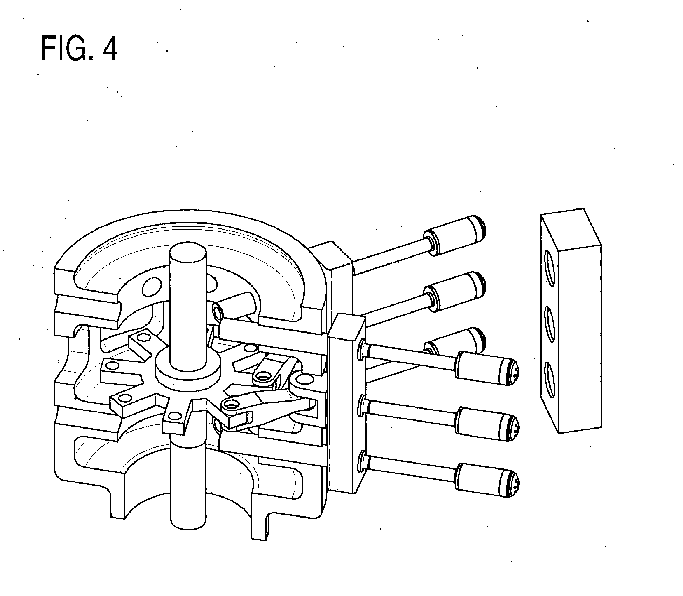

La figure 4 illustre le déplacement angulaire d'un groupe de mandrins 2.

La rotation de la tourelle 1 et la rotation de l'arbre de commande 6 peuvent être réalisées de différentes manières; p.ex. avec des moyens mécaniques, pneumatiques ou électriques. Avantageusement, ces opérations peuvent être réalisées avec deux indexeurs mécaniques. La superposition des lois de mouvement des deux indexeurs permet d'obtenir un déplacement optimal dans l'espace des mandrins 2 en fonction de' la rotation de la tourelle 1.

Il va de soi que l'invention ne se limite pas aux exemples illustrés décrits précédemment.

La section de la tourelle peut être de forme quelconque, polygonale ou circulaire. La distribution des mandrins peut également être quelconque.

La rotation de la tourelle est de préférence indexée mais elle peut être continue.

Plus généralement, l'invention couvre n'importe quel type de tourelle telle que définie dans les revendications.

## Revendications

1. Unité d'assemblage de composants de tubes, en particulier pour assembler des épaules avec des jupes; ladite unité d'assemblage comprenant un élément en forme de tourelle (1) verticale montée rotative autour de son axe de symétrie (8), ainsi que plusieurs séries de mandrins (2) rendus solidaires de la tourelle (1), chaque série étant disposée dans un même plan qui est perpendiculaire à l'axe (8) de la tourelle (1) et chaque mandrin (2) de ladite série étant dirigé selon une direction radiale par rapport à l'axe (8) de la tourelle (1) et étant monté mobile selon une direction qui se confond avec son axe de symétrie (9), les séries de mandrins (2) étant superposées et formant un empilement le long de l'axe de symétrie de la tourelle (1), ladite unité d'assemblage comprenant en outre des moyens de synchronisation qui sont adaptés pour synchroniser la rotation de la tourelle (1) avec le déplacement longitudinal des mandrins (2), **caractérisée en ce que** la mobilité des mandrins (2) est assurée par un ensemble bielle-arbre de commande (5,6).

2. Unité selon la revendication 1 comprenant plusieurs blocs (3) regroupant chacun plusieurs mandrins (2), chaque bloc (3) étant entraîné par une bielle (5).

## Patentansprüche

1. Einheit zum Zusammenbau von Tubenkomponenten, insbesondere zum Zusammenbau von Schultern mit Mänteln, wobei die Zusammenbaueinheit ein vertikales revolverförmiges Element (1), das um seine Symmetrieachse (8) drehbar montiert ist, sowie mehrere Reihen von Dornen (2) umfasst, die fest mit dem Revolver (1) verbunden sind, wobei jede Reihe in derselben Ebene angeordnet ist, die senkrecht zur Achse (8) des Revolvers (1) verläuft, und jeder Dorn (2) der Reihe in einer radialen Richtung bezüglich der Achse (8) des Revolvers (1) ausgerichtet und in einer Richtung beweglich montiert ist, die mit seiner Symmetrieachse (9) zusammenfällt, wobei die Reihen von Dornen (2) übereinander liegen und einen Stapel entlang der Symmetrieachse des Revolvers (1) bilden, wobei die Zusammenbaueinheit ferner Synchronisationsmittel umfasst, die geeignet sind, die Drehung des Revolvers (1) mit der Längsverschiebung der Dorne (2) zu synchronisieren, **dadurch gekennzeichnet, dass** die Beweglichkeit der Dorne (2) durch eine Anordnung aus Pleuelstange und Steuerwelle (5, 6) gewährleistet ist.

2. Einheit nach Anspruch 1, umfassend mehrere Blöcke (3), in denen jeweils mehrere Dorne (2) eingegliedert sind, wobei jeder Block (3) von einer Pleuelstange (5) angetrieben wird.

## Claims

1. Unit for assembling tube components, in particular for assembling shoulders with skirts; said assembly unit comprising a vertical turret-shaped element (1) rotatably mounted about its axis of symmetry (8) in addition to a plurality of series of mandrels (2) fixed to the turret (1), each series being arranged in the same plane which is perpendicular to the axis (8) of the turret (1) and each mandrel (2) of said series being oriented in a radial direction relative to the axis (8) of the turret (1) and being movably mounted in a direction which merges with its axis of symmetry (9), the series of mandrels (2) being superposed and forming a stack along the axis of symmetry of the turret (1), said assembly unit further comprising means for synchronization which are suitable for synchronizing the rotation of the turret (1) with the longitudinal displacement of the mandrels (2), **characterized in that** the mobility of the mandrels (2) is ensured by a connecting rod-drive shaft assembly (5, 6).

2. Unit according to Claim 1, comprising a plurality of blocks (3) each grouping together a plurality of mandrels (2), each block (3) being driven by a connecting rod (5).
